# EUROPÄISCHE PATENTSCHRIFT

(11) **EP 1 306 014 B1**
(45) Veröffentlichungstag und Bekanntmachung des Hinweises auf die Patenterteilung: **12.11.2003**
(21) Anmeldenummer: 01124352.4
(22) Anmeldetag: 23.10.2001
(51) Int. Cl.: A23J 3/08, A23J 1/20

(54) **Verfahren zur Herstellung von Molkenproteinaggregaten aus Sauermolke**
Process for preparing whey protein aggregates from acid whey
Procédé de préparation des agrégats de protéines du petit-lait à partir de petit-lait acide

(43) Veröffentlichungstag der Anmeldung: 02.05.2003
(73) Patentinhaber: Molkerei Alois Müller GmbH & Co., D-86850 Fischach-Aretsried (DE)
(72) Erfinder: Besner, Hans Dr.-Ing., 86316 Friedberg (DE)
(74) Vertreter: Stahl, Gerhard F.W.

(56) Entgegenhaltungen:
- EP-A- 0 347 237
- EP-A- 0 412 590
- DE-A- 19 906 379
- US-A- 4 265 924
- US-A- 5 503 864
- JU ZHI YONG ET AL: "Gelation of pH-aggregated whey protein isolate solution induced by heat, protease, calcium salt, and acidulant" JOURNAL OF AGRICULTURAL AND FOOD CHEMISTRY, AMERICAN CHEMICAL SOCIETY. WASHINGTON, US, Bd. 46, Nr. 5, Mai 1998 (1998-05), Seiten 1830-1835, XP002146903 ISSN: 0021-8561

## Beschreibung

Die Erfindung betrifft ein Verfahren zur Herstellung von Molkenproteinaggregaten aus Sauermolke, einem Konzentrat aus Sauermolke oder einem durch ein Trennverfahren abgeschiedenen proteinhaltigen Teil der Sauermolke.

Die Erzeugung von Molkenproteinaggregaten im µm-Bereich aus Molkenproteinlösungen ist Gegenstand verschiedener Veröffentlichungen. Der Wissensstand von 1999 wird in der DE 199 06 379 A1 aufgezeigt. Die dort genannten Veröffentlichungen beschreiben weite Bereiche der technisch möglichen Erhitzungstemperaturen, Heißhaltezeiten, pH-Werte, sowie verschiedene Erhitzungsarten. Teilweise wird eine nachträgliche mechanische Behandlung der hitzedenaturierten Molkenproteine beschrieben. Keine dieser Veröffentlichungen beschreibt jedoch die Erzeugung von Molkenproteinaggregaten mit mittleren Aggregatdurchmessern (Medianwert) zwischen 1 und 10 µm aus Sauermolke, einem Konzentrat aus Sauermolke oder einem durch Trennverfahren abgeschiedenen Teil der Sauermolke.

Als Molke bezeichnet der Fachmann die Flüssigkeit, die bei der Trennung des Koagulums aus Milch, Rahm und Magermilch anfällt. Dabei wird unterschieden zwischen Süßmolke und Sauermolke. Nach der Milcherzeugungsverordnung (Milch-ErzV) ist Süßmolke das "durch Abscheiden des Käsestoffes bei überwiegender Labeinwirkung gewonnene Milchserum, auch unter Verwendung von Lactase". Im Gegensatz dazu wird Sauermolke als "durch Abscheiden des Käsestoffes bei überwiegender Säureeinwirkung gewonnene Milchserum, auch unter Verwendung von Lactase" definiert. Süßmolke kann zwar nachgesäuert werden, sie wird dadurch aber nicht zur Sauermolke gemäß vorstehender Definition.

Die vorliegende Erfindung betrifft die Behandlung von Sauermolke, oder einem Konzentrat aus Sauermolke, oder einem durch Trennverfahren abgeschiedenen proteinhaltigen Teil der Sauermolke. Damit ist nicht etwa eine durch nachträgliche Säuerung behandelte molkenproteinhaltige Lösung gemeint, wie z. B. Süßmolke, die mit Hilfe technischer Säuren gesäuert wird. Es sind vielmehr molkenproteinhaltige Lösungen gemeint, deren saurer pH-Wert durch Fermentation entstand. Der typische pH-Wert von Sauermolke liegt zwischen 4,5 und 4,7 [DEMMLER, G. (1968): "Milcheiweiß und Molkenprodukte" in: Handbuch der Lebensmittelchemie, III. BBd., Teil 1, Tierische Lebensmittel, Springer-Verlag, Berlin-Heidelberg-New-York]. Häufig werden auch unter 4,5 liegende pH-Werte gemessen. Ebenso kann der pH-Wert der Sauermolke, oder eines Konzentrats aus Sauermolke, oder ein durch Trennverfahren abgeschiedener proteinhalter Teil der Sauermolke außerhalb des Bereichs von 4,5 bis 4,7 liegen. Das erfindungsgemäß zu verarbeitende Substrat Sauermolke oder ein Konzentrat aus Sauermolke, oder ein durch Trennverfahren abgeschiedener proteinhaltiger Teil der Sauermolke hat jedoch stets einen sauren pH-Wert. Sauermolke unterscheidet sich von Süßmolke aber nicht nur durch den pH-Wert, sondern auch durch ihre Zusammensetzung {SIENKIEWICZ, T.; RIEDEL, C.-L. (1990): "Whey and Whey Utilization" Verlag Th. Mann, Gelsenkirchen-Buer, Germany].

In der DE 199 06 379 A1 wird ein Verfahren zur Herstellung denaturierter Molkenproteinaggregate, bevorzugt mit einer mittleren Aggregatgröße im Bereich von 1 bis 4 µm beschrieben, welches die Schritte umfaßt, daß eine auf einen Proteingehalt von maximal 4 Gew. % angereicherte wäßrige Lösung mit Molkenproteinen mit einem pH-Wert im Bereich von 5,0 bis 7,0 unter im wesentlichen nicht-scherenden Bedingungen bei einer Temperatur im Bereich von 75 bis 150 °C mittels Heißhaltung zu > 80 % bezogen auf die Proteine, hitzedenaturiert wird. Obgleich die Bereiche des Temperatur- und pH-Wertes in dieser Druckschrift sehr weit gefaßt sind, ist damit nicht Sauermolke, oder ein Konzentrat aus Sauermolke oder ein durch Trennverfahren abgeschiedener proteinhaltiger Teil der Sauermolke betroffen, da der typische pH-Wert von Sauermolke, wie vorstehend erwähnt, zwischen 4,5 und 4,7 liegt. Im übrigen wird in dieser Druckschrift ein pH-Wert der wäßrigen Lösung zwischen 6.0 und 6,5 als bevorzugt bezeichnet.

Die Fällung von Molkenproteinen durch Anwendung von Hitze und Säure ist an sich bekannt. In speziellen Verfahren werden die Molkenproteine durch Anwendung langer Erhitzungszeiten und durch die Einwirkung von Säure ausgefällt {KESSLER, H. G. (1996): "Bioverfahrenstechnik und Molkeverarbeitungsprozesse" in: Lebensmittel- und Bioverfahrenstechnik - Molkereitechnologie; Verlag A. Kessler, Freising]. Unter anderem wird auch Sauermolke einer Erhitzung zur Fällung der Molkenproteine unterzogen, jedoch werden durch die angewendeten Erhitzungsbedingungen keine Molkenproteinaggregate mit einer Aggregatgröße (Medianwert) im Bereich von 1 bis 10 µm erzeugt, sondern bedingt durch die lange Erhitzungszeit bei Temperaturen unter 100 °C oder über 120 °C, eine ausgefällte Masse mit großen Partikeldurchmessern. Den in diesem Zusammenhang bekannten Verfahren ist gemein, daß die Ausbeute an Proteinaggregaten in der gewünschten Größe von etwa 0,1 bis 20 µm gering ist. Außerdem sind diese Verfahren großenteils kompliziert und aufwendig und deshalb für die industrielle Anwendung ungeeignet.

Die US-A-4 265 924 beschreibt die Gewinnung von Proteinen aus Milchserum mit Hilfe von Erhitzung zur Denaturierung der Proteine und darauffolgender Abtrennung durch Ultrafiltration. Bei der vorgeschlagenen Erhitzung werden 35 bis 70 % der Proteine vor dem Filtrieren denaturiert. Nach der Filtration wird das Retentat einer erneuten Erhitzung unterzogen, um auch die noch nicht denaturierten Proteine einer Denaturierung zu unterziehen. Der Prozeß wird unter anderem bei einem pH-Wert von 4,5 bis 4,6 beschrieben. Beispielhaft wird eine Erhitzung bei 98 °C für 20 bis 25 Minuten beschrieben. Mit den angegebenen Erhitzungsbedingungen ist es aber nicht möglich, Molkenproteinaggregate mit einer mittleren Aggregatgröße (Medianwert) im Bereich von 1 bis 10 µm aus Sauermolke zu gewinnen.

Molkenproteinaggregate mit Medianwerten zwischen 1 µm und 10 µm bieten diverse technologische Vorteile gegenüber der nichtaggregierten Form. Beispielsweise werden Partikel in diesem Größenbereich in der Literatur im Mundgefühl als cremig beschrieben [MILLER, M. S. (1994) "Proteins as fat substitutes" In : Protein Functionalitiy in Food Systems (Hrsgg. HETTIARACHCHY, N. S.; ZIEGLER, G. R.), New York, Basel, Hongkong]. Die Partikel können beispielsweise in konzentrierter Form als Fettersatzstoff dienen.

Der vorstehend gebrauchte Ausdruck, daß die mittlere Aggregatgröße (Medianwert) zwischen 1 und 10 µm liegt, bedeutet, daß im wesentlichen die Aggregatgröße zwischen 0,1 und 20 µm liegen soll; hierbei ist der Medianwert so definiert, daß bei einer gegebenen Größenverteilung 50 Vol.% der Teilchen unterhalb dieses Wertes liegen und 50 Vol.% oberhalb davon. Dieser Medianwert wird in der Fachwelt auch mit D_{50,3} abgekürzt. Wenn dann die Aggregatg,röße "im wesentlichen" zwischen 0,1 und 20 µm liegen soll, so ist dies so zu verstehen, daß mehr als 90 Vol.%, bevorzugt mehr als 95 Vol.% der Aggregate in dem genannten Größenbereich zwischen 0,1 und 20 µm liegen.

Die Erhitzung von Sauermolke gilt in der Fachwelt als problematisch, da die Meinung vorherrscht, daß eine hohe Hitzebelastung zu starken Wandbelägen im kontinuierlichen Erhitzer (wie zum Beispiel Platten- oder Röhrenwärmeaustauscher) durch Proteinfällung führt. Demzufolge werden im allgemeinen Temperaturen über den Bedingungen bei der Pasteurisation (z. B. 15 s bei 74 °C) vermieden.

Aufgabe der Erfindung ist es daher, ein einfach ausführbares Verfahren anzugeben, um aus Sauermolke oder einem Konzentrat aus Sauermolke oder einem durch Trennverfahren abgeschiedenen proteinhaltigen Teil der Sauermolke Molkenproteinaggregate mit einer mittleren Aggregatgröße (Medianwert) im Bereich von 1 bis 10 µm herzustellen.

Erfindungsgemäß wird diese Aufgabe dadurch gelöst, daß das Ausgangsprodukt unter im wesentlichen nicht-scherenden Bedingungen erhitzt und bis zu 60 Sekunden auf einer Temperatur von 90 bis 120 °C gehalten wird.

Im Hinblick auf den angestrebten geringen Durchmesser der Molkenproteinaggregate ist gemäß einer Weiterbildung des erfindungsgemäßen Verfahrens vorgesehen, daß das Ausgangsmaterial bis zu 15 Sekunden auf einer Temperatur von 100 bis 110 °C gehalten wird.

Gemäß einer bevorzugten Ausführungsform des erfindungsgemäßen Verfahrens wird das Ausgangsprodukt bis zu 3 Sekunden auf einer Temperatur von 108 bis 110 °C gehalten. Durch diese kurzzeitige Erhitzung ist es möglich, aus Sauermolke Molkenproteinaggregate mit einem mittleren Aggregatdurchmesser (Medianwert) von < 5 µm zu erzeugen.

Der vorstehend gebrauchte Ausdruck, daß die Erhitzung unter überwiegend nicht-scherenden Bedingungen verlaufen soll, bedeutet, daß die Erhitzung mit Hilfe eines in der Lebensmittelindustrie herkömmlichen Erhitzers wie z. B. Plattenerhitzer, Röhrenerhitzer oder einer direkten Erhitzung mittels Direktdampfverfahen erfolgen kann. Im Gegensatz dazu beschreiben verschiedene Veröffentlichungen die Anwendung von Schabewärmetauschern zur Erhitzung insbesondere von Konzentraten aus Molkenprotein. Beim Einsatz eines Schabewärmetauschers spricht der Fachmann von einer Erhitzung unter Scherung. Überwiegend nicht-scherend bedeutet somit, daß das Medium nur den durch die Strömung durch einen herkömmlichen Erhitzer wirkenden Scherungen ausgesetzt ist. Eine darüber hinausgehende Scherung kann angewendet werden, ist aber zur Herstellung der Partikel im bevorzugten Größenbereich nicht notwendig.

Weiterhin könnte partikulierte Sauermolke konzentriert und zu Pulver verarbeitet werden. Außerdem können die koagulierten Proteine z B. durch Ultrafiltration, Mikrofiltration, Zentrifugieren oder Dekantieren abgetrennt und konzentriert werden, um entweder das Partikelkonzentrat in anderen Produkten einzusetzen oder das Partikelkonzentrat zu Pulver zu trocknen.

Da Sauermolke im Gegensatz zu Süßmolke auch ohne Verwendung von zugesetzten Enzymen gewonnen werden kann, eignen sich die mit dem erfindungsgemäßen Verfahren hergestellten Molkenproteinaggregate als Zusatz zu Lebensmitteln für Allergiker.

### Herstellungsbeispiel 1

Sauermolke mit einem pH-Wert von 4,4 wurde mit Hilfe eines Röhrenwärmetauschers zum Zweck der Hitzedenaturierung der Molkenproteine hoch erhitzt. Bei dem eingesetzten Röhrenwärmetauscher handelte es sich um eine Anlage mit folgenden Daten:
Nennweite DN 10
Vorwärmer, L = 18 m (Heißwassertemp. 80 °C); Produkttemp. konstant 75 °C
Hocherhitzer, L = 18 m (Dampfdruck 1,6 bar, entsprechend 113 °C)
Heißhaltestrecke DN 10, L = 5 Meter
Wasserkühler DN 10, L = 18 m + DN 15, L = 18 m

Die Heißhaltezeit betrug bei einem Durchsatz von 110 l/h ca. 12 s. Die Haltezeit wurde im Versuchsverlauf durch Erhöhung des Volumenstroms auf ca. 10 s reduziert. (140 l/h), da Partikelgrößenbestimmungen mit Hilfe eines Laserbeugungsspektroskops zunächst zu große Partikel ergaben.

Die Temperaturdifferenz zwischen Produkt und Heizmedium wurde möglichst gering gehalten, um die Produktansatzbildung am Wärmetauscher zu minimieren. Die Temperaturdifferenz betrug im Vorwärmer ca. 5 °C und im Hocherhitzer ca. 3°C. Die gesamte Röhrenanlage war mit Drucksensoren ausgestattet, so daß ein Druckanstieg kontinuierlich aufgezeichnet werden konnte. Der Druckanstieg führte nach 8 Stunden Betriebszeit ausgehend von einem Druckverlust von 1,4 bar zu einem Druckverlust am Ende der Betriebszeit von ca. 5 bar. Der Eingangsdruck betrug am Ende der Betriebszeit von 8 Stunden ca. 5,2 bar.

Nach der Betriebszeit wurden vor dem Reinigungsschritt die Erhitzerrohre geöffnet. Es wurde ein Produktansatz mit einer Stärke von ca. 1 mm festgestellt, der sich aber leicht abschaben ließ. Eine Reinigung mit einem basischen Reinigungsmittel bei 80 °C / 30 min führte zu einem vollständigen Abtrag des Produktansatzes.

Die volumenbezogene Partikelgröße ließ sich durch schrittweise Absenkung der Temperatur von 110 °C auf 102 °C sowie Erhöhung des Durchsatzes von 110 l/h auf 140 l/h (Verweilzeit von 12.5 s auf 10 s reduziert) von anfänglich D _{50,3} = 10 µm (d.h. 50 % derTeilchen liegen unter 10 µm) auf D _{50,3} = 5 µm verringern. Wichtig bei der Partikulierung sind nicht nur die mittleren Teilchengrößen, sondern auch die Größenklasse der größten Teilchen. Diese Größenklasse lag nach der Optimierung bei D _{90,3} = 10 µm, d. h. 90 % der Teilchen lagen unter 10 µm. Wie sich nach einer eintägigen Lagerung zeigte, kommt es bei dieser Größenverteilung nur zu einer schwachen Sedimentierung (wichtig für eventuelle Zwischenstapelungen). Je nach Denaturierungsgrad kann die Partikelgröße weiter optimiert werden. Ein hoher Denaturierungsgrad ist anzustreben, da dies mit einer hohen Ausbeute gleichzusetzen ist und eine Hitzestabilität für eine zweite Erhitzung nur bei einem möglichst hohen Denaturierungsgrad gegeben ist. Dabei ist zu beachten, daß zu kleine Partikel ebensowenig erwünscht sind wie zu große Partikel. Letztlich hängt die anzustrebende Partikelgröße auch vom Einsatzgebiet ab.

Auf die beschriebene Weise wurden ca. 1.000 I Sauermolke erhitzt. Die Kühlung erfolgte mittels Röhrenkühler auf unter 10 °C. Der pH-Wert betrug nach der Erhitzung 4,37.

### Analysenergebnisse:

| Denaturierungsgrade bei Erhitzungstemperatur | β-Laktoglobulin | α-Laktalbumin |
|---|---|---|
| Rohmolke* | 0 % | 0 % |
| 110 °C (110 l/h) | 96 % | 10 % |
| 106 °C (110 l/h) | 95 % | 11 %** |
| 102 °C (110 l/h) | 94 % | 11 %** |
| 102 °C (140 l/h) | 92 % | 6 % |
| Mischmolke | 92 % | 8 % |

| | | |
|---|---|---|
| * Annahme: Denaturierung = 0 | | |
| ** liegt im Fehlerbereich der Analyse. Denaturierungsgrad kann bei milderen Erhitzungsbedingungen nicht ansteigen. | | |

### Herstellungsbeispiel 2

Im industriellen Maßstab wurde entstaubte Sauermolke mit Hilfe eines Röhrenwärmetauschers bei einem Durchsatz von 30.000 l / erhitzt. Die Erhitzungstemperatur betrug 110 °C bei einer Heißhaltezeit von drei Sekunden. 80.000 l Sauermolke mit einem Ausgangs-pH-Wert von 4,4, einem Proteingehalt von 0,79 % und einer Trockenmasse von 5,96 % wurden verarbeitet.

Während der Erhitzungszeit war die Belagbildung gering, wodurch während der Prozeßzeit nur ein geringer Druckanstieg von ca. 0,5 bar zu verzeichnen war. Die erhitzte Sauermolke war von ihrer Erscheinung her milchig trüb und zeigte auch nach mehreren Stunden Lagerung kein Absetzen der entstandenen Partikel. Der Medianwert D_{50,3} der Partikelverteilung betrug 4,75 µm. Der D _{90,3} betrug 9,4 µm, d. h. 90 % der Teilchen lagen unter 9,4 µm.

## Patentansprüche

1. Verfahren zur Herstellung von Molkenproteinaggregaten aus Sauermolke, einem Konzentrat aus Sauermolke oder einem durch ein Trennverfahren abgeschiedenen proteinhaltigen Teil der Sauermolke, **dadurch gekennzeichnet, daß** das Ausgangsprodukt unter im wesentlichen nicht-scherenden Bedingungen erhitzt und bis zu 60 s auf einer Temperatur von 90 bis 120 °C gehalten wird.

2. Verfahren nach Anspruch 1, **dadurch gekennzeichnet, daß** das Ausgangsprodukt bis zu 15 s auf einer Temperatur von 100 bis 110 °C gehalten wird.

3. Verfahren nach Anspruch 1, **dadurch gekennzeichnet, daß** das Ausgangsprodukt bis zu 3 s auf einer Temperatur auf 108 bis 110 °C gehalten wird.

## Claims

1. Process for preparing whey protein aggregates from sour whey, a concentrate of sour whey or a protein-containing component of the sour whey separated off by a separation process, **characterized in that** the initial or base product is heated under substantially non-shearing conditions and is kept at a temperature of 90 to 120°C for up to 60 s.

2. Process according to Claim 1, **characterized in that** the initial product is kept at a temperature of 100 to 110°C for up to 15 s.

3. Process according to Claim 1, **characterized in that** the initial product is kept at a temperature of 108 to 110°C for up to 3 s.

## Revendications

1. Procédé de préparation d'agrégats de protéines du petit-lait à partir de petit-lait acide, d'un concentré de petit-lait acide ou d'une fraction du petit-lait acide contenant des protéines et séparée par un procédé de séparation, **caractérisé en ce que** le produit de départ est chauffé dans des conditions essentiellement exemples de cisaillement et maintenu sur une durée allant jusqu'à 60 s à une température comprise entre 90 et 120 °C.

2. Procédé selon la revendication 1, **caractérisé en ce que** le produit de départ est maintenu sur une durée allant jusqu'à 15 s à une température comprise entre 100 et 110 °C.

3. Procédé selon la revendication 1, **caractérisé en ce que** le matériau de départ est maintenu sur une durée allant jusqu'à 3 s à une température comprise entre 108 et 110 °C.
